# EUROPEAN PATENT APPLICATION

(11) **EP 4 767 887 A1**
(43) Date of publication of application: **01.07.2026**
(21) Application number: 25210154.8
(22) Date of filing: 21.10.2025
(51) Int. Cl.: A47J 43/24

(54) **SALAD SPINNER**

(30) Priority: 25.12.2024 CN 202423221303 U
(71) Applicant: Zhejiang Fullstar Technology Co., Ltd, Taizhou Zhejiang (CN)
(72) Inventor: LU, Congqiang, Taizhou (CN)
(74) Representative: Metida

(57) **Abstract**

The utility model belongs to the technical field of food processing machines and relates to a salad spinner (1), which includes a bottom basin, a mesh basket (2), a cover (3) and a top cover (4). The top cover (4) is provided with a drive assembly (5) for driving the cover (3) to rotate, the cover (3) is circumferentially fixed to the mesh basket (2). When the cover (3) is rotated, and the mesh basket (5) is driven to rotate synchronously. A top of the cover is provided with a coaxial convex ring (6), and a bottom of the cover is provided with a brake assembly. The brake assembly includes a brake seat (7), a brake button (8), a slider (9) and a brake block (10). The slider (9) slides radially on the brake seat (7), and a bottom of the slider extends to a bottom of the brake seat and is connected to the brake block (10). The brake button (8) drives the slider (9) and the brake block (10) to slide inward, and the brake block (10) brakes the cover (3) when sliding to abut against an outer side of the convex ring (6). The salad spinner (1) provided by the utility model has the advantages of simple structure and rapid braking.

## Description

### FIELD OF THE INVENTION

The utility model belongs to the technical field of food processors, and relates to a salad spinner.

### BACKGROUND OF THE INVENTION

After the vegetables are washed, they are usually placed in a drain basket for automatic draining, which takes a long time and has poor drainage effect. In order to quickly drain the moisture from vegetables, the current trend is to use a salad spinner. The salad spinner generally includes a bottom basin, a mesh basket, a cover and a top cover. When in use, the vegetables are placed in the mesh basket, and the cover is driven to rotate by a press-type drive assembly on the top cover, which drives the mesh basket to rotate. The centrifugal force generated by the rotation of the mesh basket throws the moisture out of the vegetables and separates into the bottom basin, thereby dehydrating the vegetables.

After the mesh basket rotates and dehydrates, it is necessary to wait for the rotation to stop before taking out the vegetables. This process is very long. Therefore, it is necessary to set a brake device in the dehydrator, which can quickly brake the rotating mesh basket.

Chinese invention patent CN103391739A (published on November 13, 2013) discloses an improved braking mechanism for a device for drying food and other items. A device for drying food, including: a container, including a bowl provided with a sidewall terminating in a rim defining an opening and a lid removably attached to the bowl and covering the opening; a basket assembly, positioned in the bowl and rotatable relative to the container about an axis of rotation, the basket assembly including a basket provided with a perforated hole and a sidewall terminating in a top edge and a cover removably attached to the top edge of the basket; an upstanding annular ridge, extending from a top surface of the cover toward the lid, the annular ridge being coaxially disposed about the axis of rotation; and a brake assembly, including a brake button supported by the lid, characterized in that the brake button is operatively connected to a clamping arm extending parallel to the axis of rotation and movable between a non-braking position and a braking position, the clamping arm frictionally engages the annular ridge when the brake button translates relative to the cover, and the clamping arms contract toward each other when the clamping arms move toward the braking position.

The above dehydrator brakes the cover by means of the clamping arms that contract with each other. The main source of the braking force is the force generated by the deformation of the clamping arms. This force is very limited and cannot quickly brake the cover.

### Brief Description of the Utility Model

In view of the deficiencies in the prior art, the utility model provides a salad spinner, which has the advantages of simple structure and rapid braking.

To solve the above-mentioned technical problem, the purpose of the utility model is achieved through the following technical solutions.

A salad spinner includes a bottom basin, a mesh basket, a cover and a top cover. The top cover is provided with a drive assembly for driving the cover to rotate, the cover is circumferentially fixed to the mesh basket. When the cover is rotated, and the mesh basket is driven to rotate synchronously. A top of the cover is provided with a coaxial convex ring, and a bottom of the cover is provided with a brake assembly. The brake assembly includes a brake seat, a brake button, a slider and a brake block. The slider slides radially on the brake seat, and a bottom of the slider extends to a bottom of the brake seat and is connected to the brake block. The brake button drives the slider and the brake block to slide inward, and the brake block brakes the cover when sliding to contact an outer side of the convex ring.

In the above salad spinner, the top cover is provided with a mounting cavity, and a bottom of the mounting cavity is provided with a mounting through hole; the brake button slides axially in the mounting cavity, and a bottom thereof passes through the mounting through hole and extends downward; a bottom of the brake button and a top of the slider are provided with drive inclined surfaces that are cooperated with each other; when the brake button slides downward, the drive inclined surface drives the slider to slide inward; specifically, the drive inclined surface is inclined outward from top to bottom.

In the above salad spinner, the structure of the brake button driving the slider may also be configured in other ways; for example, the brake button abuts against the outer side of the slider, and the brake button is radially slid to drive the slider to slide inward.

In the above salad spinner, the brake seat is provided inside with a radial sliding groove for the slider to slide, and a bottom of the brake seat is provided with a side sliding through groove for the slider to extend and slide and an axial through groove for the slider to slide; a middle of the slider is provided with a drive through groove cooperating with the brake button, and the drive inclined surface is disposed on an inner side of the drive through groove.

In the above salad spinner, a rear side of the axial through groove of the brake seat is provided with a radial limiting block extending upward to the drive through groove, and a radial limiting structure is formed when an inner side of the radial limiting block abuts against the inner side of the drive through groove.

In the above salad spinner, a radial return spring for driving the slider to reset is disposed between the slider and the brake seat, and an axial return spring for driving the brake button to reset is disposed between the brake button and a bottom of the mounting cavity.

In the above salad spinner, both sides of the mounting through hole are provided with limiting through holes, both sides of the brake button are provided with axial limiting blocks passing through the limiting through holes, and a bottom of the axial limiting block is provided with an axial limiting clamp abutting against and limiting a bottom of the top cover.

In the above salad spinner, the bottom of the top cover is provided with a mounting seat cooperating with the brake seat, the brake seat is detachably connected to the mounting seat through a fastener, and the mounting seat and the brake seat form a closed chamber for receiving the slider.

In the above salad spinner, the brake block is connected to an inner side of the slider, and an inner side of the brake block is provided with an arc-shaped surface adapted to the outer side of the convex ring.

In the above salad spinner, the brake block is made of a flexible material, and one end of the brake block opposite to the slider is provided with a plurality of connectors; a bottom of the slider is provided with a connecting cavity cooperating with the connector, and the bottom of the slider is provided with a fixing plate that closes the connecting cavity and fixes the brake block; the fixing plate is fixedly connected to the slider through a clamping structure or a column hole structure.

Compared with the prior art, the utility model has the following beneficial effects.

The utility model provides a salad spinner with an improved brake structure, characterized in that the brake button directly drives the slider and the brake block to move radially, and the brake block acts on the convex ring of the cover to produce a braking effect. The brake structure of the utility model may directly transmit a force applied by an operator to the brake block for acting on the convex ring of the cover, the braking force may increase with the increase of the applied force, and at the same time, the use of the brake block that may generate sufficient friction may further improve the braking effect.

### Brief Description of the Drawings

FIG. 1 is a three-dimensional view of the utility model;
FIG. 2 is an exploded view of FIG. 1;
FIG. 3 is an enlarged view of A in FIG. 2;
FIG. 4 is a three-dimensional view of a top cover;
FIG. 5 is a three-dimensional view of a brake assembly;
FIG. 6 is an exploded view of FIG. 5;

Description of reference numerals: 1-bottom basin; 2-mesh basket; 3-cover; 4-top cover; 5-drive assembly; 6-convex ring; 7-brake seat; 8-brake button; 9-slider; 10-brake block; 11-mounting cavity; 12-mounting through hole; 13-drive inclined surface; 14-radial sliding groove; 15-side sliding through groove; 16-axial through groove; 17-drive through groove; 18-radial limiting block; 19-radial return spring; 20-axial return spring; 21-limiting through hole; 22-axial limiting block; 23-axial limiting clamp; 24-mounting seat; 25-connector; 26-connecting cavity; 27-fixing plate.

### Detailed Description of the Invention

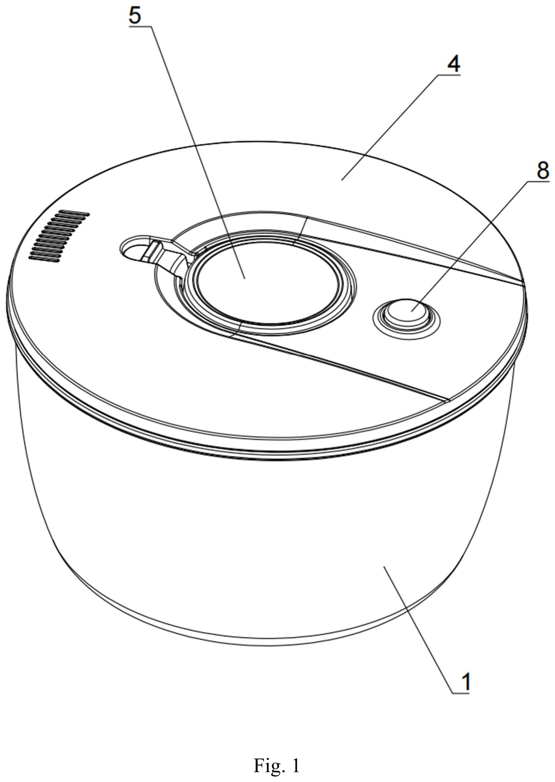

The utility model is further described below with reference to the accompanying drawings and the embodiments. With reference to FIGS. 1 to 6, a salad spinner includes a bottom basin 1, a mesh basket 2, a cover 3 and a top cover 4, the top cover 4 being provided with a drive assembly 5 for driving the cover 3 to rotate, the cover 3 being circumferentially fixed to the mesh basket 2, the mesh basket 2 being driven to rotate synchronously when the cover 3 is rotated, characterized in that a top of the cover 3 is provided with a coaxial convex ring 6, and a bottom of the cover 4 is provided with a brake assembly; the brake assembly includes a brake seat 7, a brake button 8, a slider 9 and a brake block 10; the slider 9 slides radially on the brake seat 7, and a bottom of the slider 9 extends to a bottom of the brake seat 7 and is connected to the brake block 10; the brake button 8 drives the slider 9 and the brake block 10 to slide inward, and the brake block 10 brakes the cover 3 when sliding to contact an outer side of the convex ring 6.

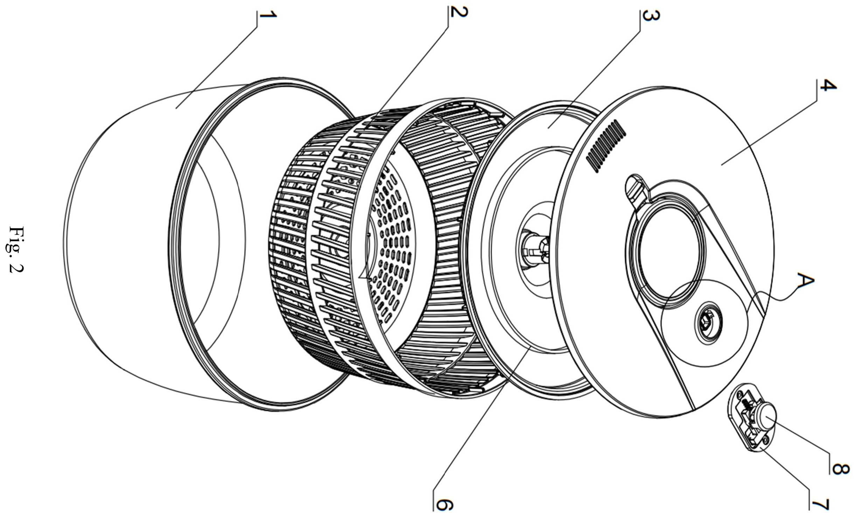

With reference to FIGS. 1 and 2, the dehydration method of the embodiment is the same as that of the existing dehydrator, and will not be described in detail here. The braking method of the embodiment is as follows: the brake button 8 is pressed, the brake button 8 drives the slider 9 to move inward, and the brake block 10 moves inward synchronously therewith until the brake block 10 abuts against the outer side of the convex ring 6; a contact surface between the brake block 10 and the outer side of the convex ring 6 generates a friction force that hinders the rotation of the cover 3, and the friction force increases rapidly as the pressing continues, so that the cover 3 stops quickly and the mesh basket 2 stops rotating.

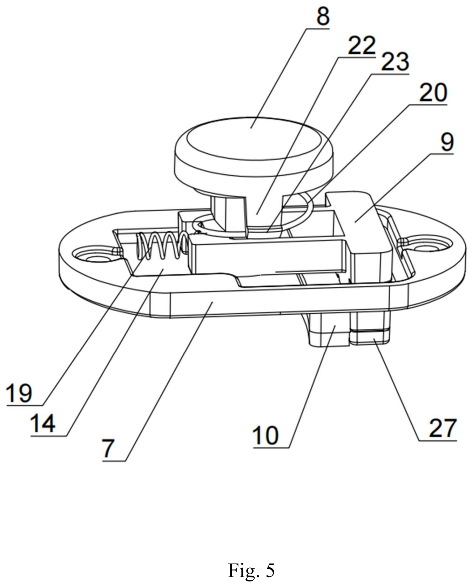

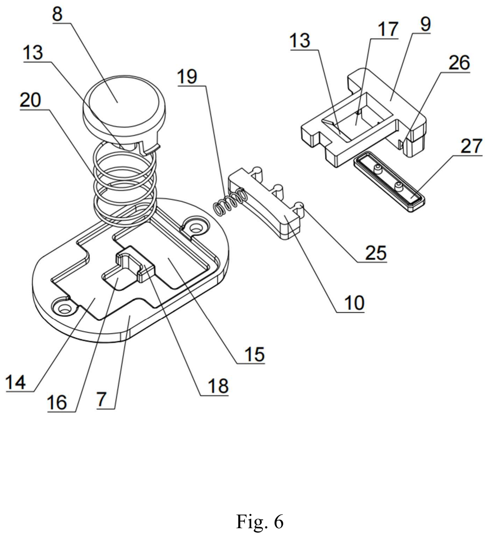

With reference to FIGS. 5 and 6, in the embodiment, a specific structure where the brake button 8 drives the slider 9 is as follows: the top cover 4 is provided with a mounting cavity 11, and a bottom of the mounting cavity 11 is provided with a mounting through hole 12; the brake button 8 slides axially in the mounting cavity 11, and a bottom thereof passes through the mounting through hole 12 and extends downward; a bottom of the brake button 8 and a top of the slider 9 are provided with drive inclined surfaces 13 that are cooperated with each other; when the brake button 8 slides downward, the drive inclined surface 13 drives the slider 9 to slide inward; specifically, the drive inclined surface 13 is inclined outward from top to bottom; when the brake button 8 is pressed, the brake button 8 is displaced axially along the mounting cavity 11, and since the slider 9 may only be displaced radially but not axially, an interaction between the drive inclined surfaces 13 causes the slider 9 to move inward.

Further, in order to make the sliding action go smoothly, the brake seat 7 is provided inside with a radial sliding groove 14 for the slider 9 to slide, and a bottom of the brake seat 7 is provided with a side sliding groove 15 for the slider 9 to extend and slide and an axial through groove 16 for the slider 8 to slide; a middle of the slider 9 is provided with a drive through groove 17 cooperating with the brake button 8, and the drive inclined surface 13 is disposed on an inner side of the drive through groove 17.

Further, a rear side of the axial through groove 16 of the brake seat 7 is provided with a radial limiting block 18 extending upward to the drive through groove 17, and a radial limiting structure is formed when an inner side of the radial limiting block 18 abuts against the inner side of the drive through groove 17.

The embodiment further provides a reset structure for the brake assembly. A radial return spring 19 for driving the slider 9 to reset is disposed between the slider 9 and the brake seat 7, the radial return spring 19 is compressed when the slider 9 moves inward, and the radial return spring 19 drives the slider 9 to reset outward after the brake button 8 is released; an axial return spring 20 for driving the brake button 8 to reset is disposed between the brake button 8 and a bottom of the mounting cavity 11, the axial return spring 20 is compressed when the brake button 8 is pressed downward, and the axial return spring 20 drives the brake button 8 to reset upward after the brake button 8 is released.

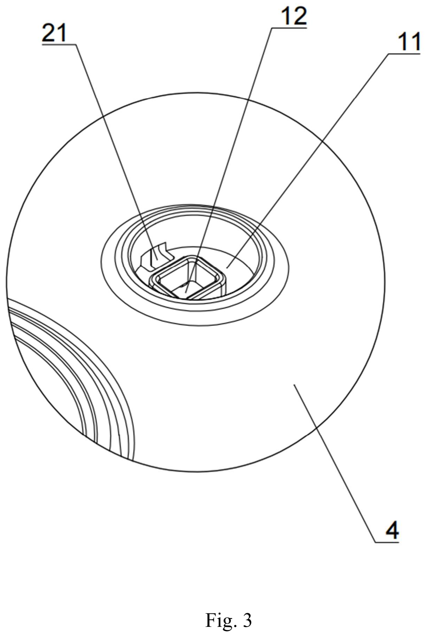

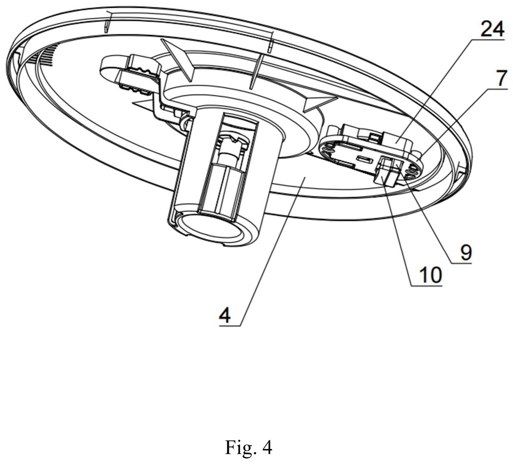

With reference to FIGS. 3 and 4, in order to prevent the brake button 8 from falling out, both sides of the mounting through hole 12 are provided with limiting through holes 21, both sides of the brake button 8 are provided with axial limiting blocks 22 passing through the limiting through holes 21, and a bottom of the axial limiting block 22 is provided with an axial limiting clamp 23 abutting against and limiting a bottom of the top cover 4.

With reference to FIG. 4, the bottom of the top cover 4 is provided with a mounting seat 24 cooperating with the brake seat 7, the brake seat 7 is detachably connected to the mounting seat 24 through a fastener, and the mounting seat 24 and the brake seat 7 form a closed chamber for receiving the slider 9.

In order to increase the contact area during braking, the brake block 10 is connected to an inner side of the slider 9, and an inner side of the brake block 10 is provided with an arc-shaped surface adapted to the outer side of the convex ring 6.

Preferably, the brake block 10 is made of a flexible material, and one end of the brake block 10 opposite to the slider 9 is provided with a plurality of connectors 25; a bottom of the slider 9 is provided with a connecting cavity 26 cooperating with the connector 25 and the bottom of the slider 9 is provided with a fixing plate 27 that closes the connecting cavity 26 and fixes the brake block 10; the fixing plate 27 is fixedly connected to the slider 9 through a clamping structure or a column hole structure. The elastic deformation produced by the brake block 10 may generate sufficient braking friction between the brake block 10 and the convex ring 6. Moreover, the greater the force of pressing the brake button 8, the greater the deformation of the brake block 10, thereby generating greater friction.

The above embodiments are only preferred embodiments of the utility model, and do not limit the protection scope of the utility model accordingly. Therefore, all equivalent changes made in accordance with the structure, shape, and principle of the utility model shall be covered by the protection scope of the utility model.

## Claims

1. A salad spinner, **characterized by** comprising a bottom basin (1), a mesh basket (2), a cover (3) and a top cover (4), the top cover (4) being provided with a drive assembly (5) for driving the cover (3) to rotate, the cover (3) being circumferentially fixed to the mesh basket (2), the mesh basket (2) being driven to rotate synchronously when the cover (3) is rotated, **characterized in that** a top of the cover (3) is provided with a coaxial convex ring (6), and a bottom of the cover (4) is provided with a brake assembly; the brake assembly comprises a brake seat (7), a brake button (8), a slider (9) and a brake block (10); the slider (9) slides radially on the brake seat (7), and a bottom of the slider (9) extends to a bottom of the brake seat (7) and is connected to the brake block (10); the brake button (8) drives the slider (9) and the brake block (10) to slide inward, and the brake block (10) brakes the cover (3) when sliding to abut against an outer side of the convex ring (6).

2. The salad spinner according to claim 1, **characterized in that** the top cover (4) is provided with a mounting cavity (11), and a bottom of the mounting cavity (11) is provided with a mounting through hole (12); the brake button (8) slides axially in the mounting cavity (11), and a bottom thereof passes through the mounting through hole (12) and extends downward; a bottom of the brake button (8) and a top of the slider (9) are provided with drive inclined surfaces (13) that are cooperated with each other; when the brake button (8) slides downward, the drive inclined surface (13) drives the slider (9) to slide inward.

3. The salad spinner according to claim 2, **characterized in that** the brake seat (7) is provided inside with a radial sliding groove (14) for the slider (9) to slide, and a bottom of the brake seat (7) is provided with a side sliding groove (15) for the slider (9) to extend and slide and an axial through groove (16) for the slider (8) to slide; a middle of the slider (9) is provided with a drive through groove (17) cooperating with the brake button (8), and the drive inclined surface (13) is disposed on an inner side of the drive through groove (17).

4. The salad spinner according to claim 2, **characterized in that** a rear side of the axial through groove (16) of the brake seat (7) is provided with a radial limiting block (18) extending upward to the drive through groove (17), and a radial limiting structure is formed when an inner side of the radial limiting block (18) abuts against the inner side of the drive through groove (17).

5. The salad spinner according to claim 2, **characterized in that** a radial return spring (19) for driving the slider (9) to reset is disposed between the slider (9) and the brake seat (7), and an axial return spring (20) for driving the brake button (8) to reset is disposed between the brake button (8) and a bottom of the mounting cavity (11).

6. The salad spinner according to claim 2, **characterized in that** both sides of the mounting through hole (12) are provided with limiting through holes (21), both sides of the brake button (8) are provided with axial limiting blocks (22) passing through the limiting through holes (21), and a bottom of the axial limiting block (22) is provided with an axial limiting clamp (23) abutting against and limiting a bottom of the top cover (4).

7. The salad spinner according to claim 1, **characterized in that** the bottom of the top cover (4) is provided with a mounting seat (24) cooperating with the brake seat (7), the brake seat (7) is detachably connected to the mounting seat (24) through a fastener, and the mounting seat (24) and the brake seat (7) form a closed chamber for receiving the slider (9).

8. The salad spinner according to claim 1, **characterized in that** the brake block (10) is connected to an inner side of the slider (9), and an inner side of the brake block (10) is provided with an arc-shaped surface adapted to the outer side of the convex ring (6).

9. The salad spinner according to claim 8, **characterized in that** the brake block (10) is made of a flexible material, and one end of the brake block (10) opposite to the slider (9) is provided with a plurality of connectors (25); a bottom of the slider (9) is provided with a connecting cavity (26) cooperating with the connector (25), and the bottom of the slider (9) is provided with a fixing plate (27) that closes the connecting cavity (26) and fixes the brake block (10).
